# EUROPEAN PATENT APPLICATION

(11) **EP 4 799 790 A1**
(43) Date of publication of application: **02.09.2026**
(21) Application number: 24882522.6
(22) Date of filing: 25.10.2024
(51) Int. Cl.: B29C 45/78, B29C 45/62

(54) **INJECTION MOLDING MACHINE**

(30) Priority: 26.10.2023 JP 2023184282
(71) Applicant: Shibaura Machine Co., Ltd., Tokyo 100-0011 (JP)
(72) Inventor: ONUMA, Hiroyuki, Numazu-shi, Shizuoka 410-8510 (JP); IGARASHI, Takuya, Numazu-shi, Shizuoka 410-8510 (JP); ARIMATSU, Hiroaki, Numazu-shi, Shizuoka 410-8510 (JP); AKISAWA, Kentaro, Numazu-shi, Shizuoka 410-8510 (JP); OSA, Noburo, Nagoya-shi, Aichi 461-8680 (JP)
(74) Representative: Hoffmann Eitle
(86) International application number: PCT/JP2024/038201
(87) International publication number: WO 2025/089414

(57) **Abstract**

An injection molding machine 1 includes: an injection device 10 configured to melt a resin material using a heating barrel 11 and inject the resin material from a nozzle 12; a plurality of heaters 15 arranged in the heating barrel 11 and configured to heat the resin material; a temperature control unit 117 configured to perform temperature control for each of the plurality of heaters 15 arranged on the heating barrel 11; a monitoring data acquisition unit 113 configured to acquire monitoring data detected by the injection device 10 when the resin material is melted by the injection device 10; a melt state estimation unit 115 configured to estimate a resin melt state that is a melt state of the resin material in the heating barrel 11 based on the monitoring data acquired by the monitoring data acquisition unit 113; and a temperature setting unit 116 configured to perform temperature setting when the temperature control of the heater 15 is performed by the temperature control unit 117, for each of the heaters 15, based on the resin melt state estimated by the melt state estimation unit 115.

## Description

### TECHNICAL FIELD

The present invention relates to an injection molding machine.

### BACKGROUND ART

In an injection molding machine that performs molding by injecting molten resin into a mold, a heater is provided on a barrel in which the resin is melted in order to melt and plasticize solid resin. When molding is performed in the injection molding machine, the barrel is heated by the heater, and the resin is melted in the barrel while controlling the temperature of the barrel. In an injection molding machine of the related art, a plurality of zones for controlling the temperature of the barrel are provided from upstream to downstream in the barrel, and the temperature of the barrel is controlled for each control zone by controlling the temperature of the heater.

Among the plurality of control zones, a control zone on a tip side where a nozzle for injecting the molten resin in the barrel is positioned has a temperature set to a value in the vicinity of a resin temperature during molding. This value is generally determined based on a recommended temperature for each resin or through flow analysis. On the other hand, since there is no predetermined value or recommended value for the temperature of the other control zones, the temperature is generally set based on experience of an operator who operates the injection molding machine. However, the temperature setting needs to be changed depending on the type of the resin and the molding cycle time.

The temperature setting for the control zones other than the control zone on the tip side in the barrel largely depends on the experience of the operator as described above. Therefore, when an inexperienced operator performs the temperature setting, it is considered that there is a possibility that an appropriate temperature is not set. Therefore, some of the injection molding machines in the related art are configured such that an appropriate temperature setting can be performed irrespective of the experience of the operator. For example, in an injection molding machine described in Patent Document 1, when the setting temperature corresponding to a position where a molten resin is accumulated in front of a screw at a time of completion of metering in a cylinder is set, the setting temperatures of the other portions are obtained by calculation based on molding conditions.

### CITATION LIST

### Patent Literature

Patent Document 1: WO 2007/105646 A

### SUMMARY OF INVENTION

### PROBLEM TO BE SOLVED BY THE INVENTION

Here, as for the amount of heat applied to the resin when the resin in the barrel is heated and melted, not only heat from the heater but also the proportions of frictional heating of the resin in the barrel, shear heating of the molten resin, and the like are very high. Since the amounts of heat based on the movement of the resin in the barrel depend on the physical properties of the resin and the supply status of pellets as raw materials, it is difficult to control the amounts of heat based on the movement of the resin. When the temperature setting during the melting of the resin is not appropriate, there is a concern that the production may become unstable due to the occurrence of molding failure caused by an insufficient amount of heat or an excess amount of heat of the molten resin.

For example, in Patent Document 1, the temperature setting for the control zones other than the control zone on the tip side in the barrel is obtained by calculation based on the molding conditions. However, since temperature disturbance during molding and frictional heating and shear heating of the resin in the barrel are not considered, it becomes likely to be difficult to constantly maintain the resin melt state. As described above, in the injection molding machine of the related art, there is a room for improvement from the viewpoint of the temperature setting for melting the resin in the barrel.

The present invention has been made under these circumstances, and an object thereof is to provide an injection molding machine in which temperature setting during melting of a resin can be more appropriately performed.

### MEANS FOR SOLVING PROBLEM

In order to solve the above problem and achieve the object, an injection molding machine includes: an injection device configured to melt a resin material using a heating barrel in which a screw is disposed, and move the screw toward where a nozzle for injecting the molten resin material is positioned to inject the resin material from the nozzle; a plurality of heaters arranged in a longitudinal direction of the heating barrel and configured to heat the resin material in the heating barrel; a temperature control unit configured to perform temperature control for each of the plurality of heaters arranged on the heating barrel; a monitoring data acquisition unit configured to acquire monitoring data detected by the injection device when the resin material is melted by the injection device; a melt state estimation unit configured to estimate a resin melt state that is a melt state of the resin material in the heating barrel based on the monitoring data acquired by the monitoring data acquisition unit; and a temperature setting unit configured to perform temperature setting when the temperature control of the heater is performed by the temperature control unit, for each of the heaters, based on the resin melt state estimated by the melt state estimation unit.

### EFFECT OF THE INVENTION

The injection molding machine according to the present invention exhibits an effect in that temperature setting during melting of a resin can be more appropriately performed.

### BRIEF DESCRIPTION OF DRAWINGS

FIG. 1 is a schematic diagram illustrating a configuration example of an injection molding machine according to an embodiment;
FIG. 2 is a detailed view of the injection device illustrated in FIG. 1;
FIG. 3 is a detailed view of a heating barrel illustrated in FIG. 2;
FIG. 4 is a detailed view of a check ring illustrated in FIG. 3;
FIG. 5 is a diagram illustrating a control device illustrated in FIG. 1;
FIG. 6 is a flowchart illustrating a control procedure when the injection molding machine according to the embodiment performs molding; and
FIG. 7 is a diagram illustrating a simulation result when a barrel temperature setting automatic change was performed.

### DESCRIPTION OF EMBODIMENTS

Hereinbelow, embodiments of an injection molding machine according to the present disclosure are described in detail on the basis of the drawings. Note that this invention is not limited by the embodiments. The constituent elements in the following embodiments include those that can be substituted and easily conceived by those skilled in the art, or those that are substantially the same.

### [Embodiments]

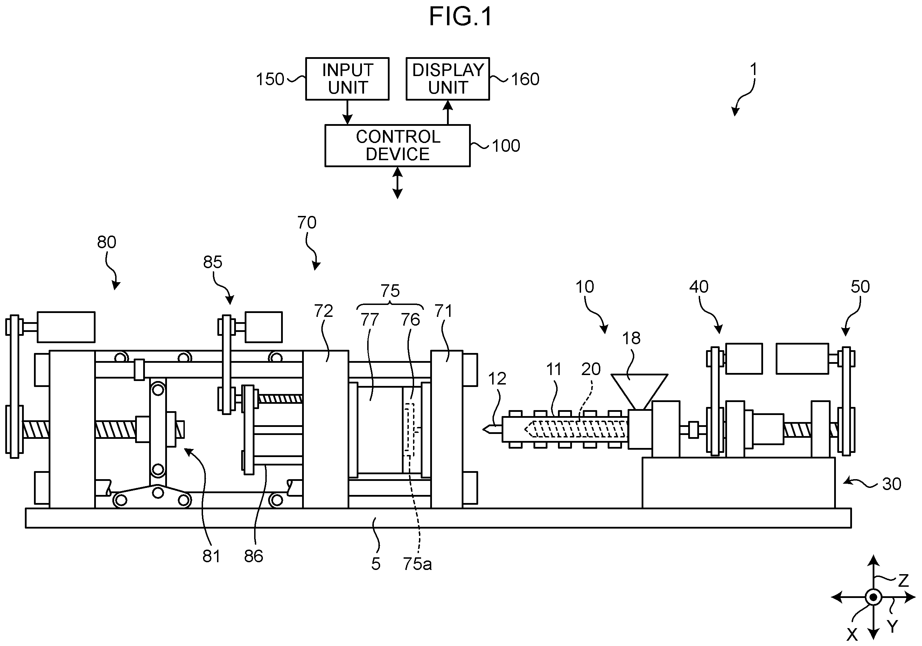

FIG. 1 is a schematic diagram illustrating a configuration example of an injection molding machine 1 according to an embodiment. In the following description, the up-down direction in the normal use state of the injection molding machine 1 is referred to as an up-down direction Z in the injection molding machine 1, the upper side in the normal use state of the injection molding machine 1 is referred to as the upper side in the injection molding machine 1, and the lower side in the normal use state of the injection molding machine 1 is referred to as the lower side in the injection molding machine 1. Further, in the following description, the longitudinal direction Y of the injection molding machine 1 is used as it is also in units including the injection molding machine 1, and a direction orthogonal to both the up-down direction Z and the longitudinal direction Y of the injection molding machine 1 is referred to as a width direction X in the injection molding machine 1.

### <Injection molding machine 1>

The injection molding machine 1 according to the present embodiment includes an injection device 10 and a mold clamping device 70, and the injection device 10 and the mold clamping device 70 are mounted on a frame 5 placed at the lower end of the injection molding machine 1. The injection molding machine 1 can manufacture various desired molded products by using the injection device 10 to melt a resin material into a plasticized material and using the mold clamping device 70 to cool and solidify the plasticized material injected from the injection device 10.

The injection device 10 includes a heating barrel 11, a screw 20, a rotation mechanism 40, a forward-backward movement mechanism 50, and a propulsion mechanism 30. The heating barrel 11 can heat and melt a resin material into a plasticized material in its interior. Further, the heating barrel 11 includes, on one end side, a nozzle 12 that injects the plasticized material, and the other end side is connected to a hopper 18 for source material introduction. The screw 20 is placed inside the heating barrel 11, and can move in the axial direction in the interior of the heating barrel 11.

The rotation mechanism 40 can introduce a resin material from the hopper 18 into the heating barrel 11 by rotating the screw 20 in the heating barrel 11.

The forward-backward movement mechanism 50 can move the screw 20 in the longitudinal direction Y in the heating barrel 11. Further, the forward-backward movement mechanism 50 can extrude the resin material from the nozzle 12 by, in the heating barrel 11, in a state where the molten resin material is stored in a portion on the end side where the nozzle 12 is located, moving the screw 20 toward where the nozzle 12 is located. Thereby, the resin material melted in the heating barrel 11 can be injected from the nozzle 12.

The mold clamping device 70 includes a stationary platen 71, a movable platen 72, a mold 75, a mold clamping drive mechanism 80, and an extrusion mechanism 85. The stationary platen 71 is placed on the frame 5 and fixed to the frame 5, and the movable platen 72 is placed opposite to the stationary platen 71 on the frame 5 from where the injection device 10 is located, and is placed to be movable with respect to the stationary platen 71.

The mold 75 has a cavity 75a to be filled with the resin material injected from the nozzle 12 of the heating barrel 11 included in the injection device 10, and can perform molding of the resin material in the cavity 75a. The mold 75 that thus performs molding of the resin material includes a stationary mold 76 and a movable mold 77. The stationary mold 76 is attached to a surface of the stationary platen 71 closer to where the movable platen 72 is located, and the movable mold 77 is attached to a surface of the movable platen 72 closer to where the stationary platen 71 is located. The movable mold 77 attached to the movable platen 72 faces the stationary mold 76 attached to the stationary platen 71; when the movable platen 72 approaches the stationary platen 71, the movable mold 77 approaches the stationary mold 76, and is combined with the stationary mold 76.

The mold clamping drive mechanism 80 can move the movable platen 72 relative to the stationary platen 71, and can close the movable mold 77 and the stationary mold 76 or open the movable mold 77 and the stationary mold 76 by moving the movable platen 72 relative to the stationary platen 71. In the present embodiment, the mold clamping drive mechanism 80 includes what is called a toggle mechanism 81, and can, with the toggle mechanism 81, move the movable platen 72 relative to the stationary platen 71.

The extrusion mechanism 85 includes an extrusion member 86 that extrudes a molded product after molding attached to the inner surface of the movable mold 77, and can remove the molded product after molding from the movable mold 77.

### <Injection device 10>

In the following description, the side in the longitudinal direction Y where the mold clamping device 70 is located with respect to the injection device 10 is referred to as the front or the front side, and the opposite side in the longitudinal direction Y of the injection device 10 from the side where the mold clamping device 70 is located is referred to as the rear or the rear side.

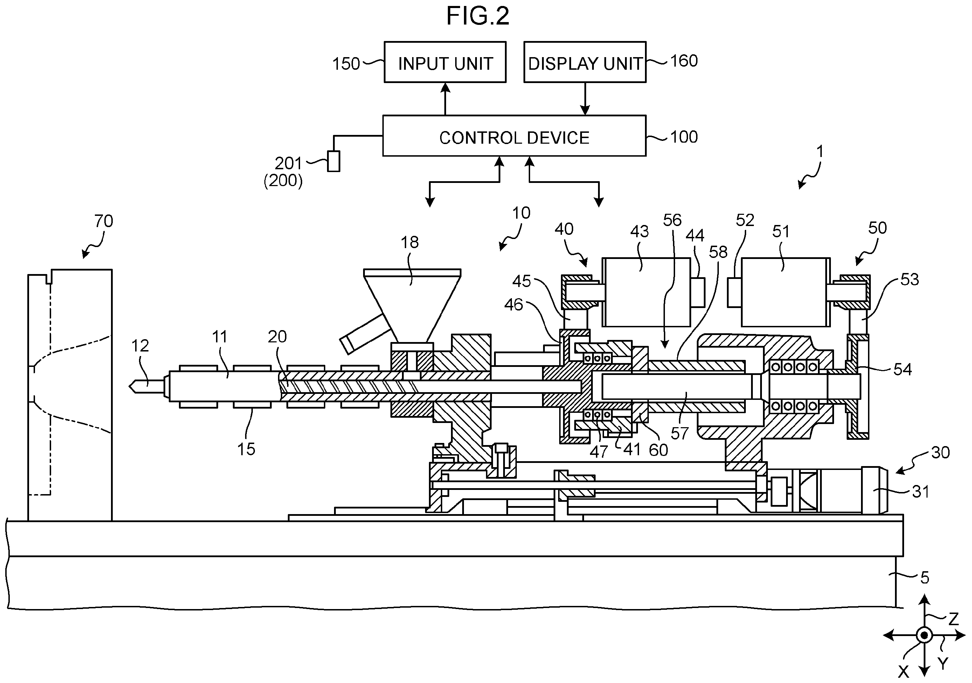

FIG. 2 is a detailed diagram of the injection device 10 illustrated in FIG. 1. The injection device 10 is placed on the frame 5 via the propulsion mechanism 30. The propulsion mechanism 30 includes a driving electric motor 31, and can, by the driving force generated by the driving electric motor 31, move the injection device 10 in the longitudinal direction Y with respect to the frame 5.

The heating barrel 11 provided in the injection device 10 extends to the front side in the longitudinal direction Y, and the nozzle 12 in close contact with the mold 75 (see FIG. 1) is disposed at a distal end of the heating barrel 11, that is, at a front end of the heating barrel 11. Specifically, the heating barrel 11 is formed in a substantially cylindrical shape, is disposed in a direction in which an axial direction is along the longitudinal direction Y, and is provided with heaters 15 such as band heaters. As a result, the heating barrel 11 can melt the resin material therein. That is, the heating barrel 11 can increase the temperature of the heating barrel 11 using the heaters 15, and can heat and melt the resin material to obtain molten resin that is a plasticized material.

The screw 20 is placed inside the heating barrel 11, and has a spiral shape in which the axial direction is a direction along the axial direction of the heating barrel 11, that is, the screw 20 has a spiral groove on the outer peripheral surface. Thus, the screw 20 formed to have a spiral shape can rotate about the axis in the heating barrel 11. Further, the screw 20 can move in the axial direction of rotation in the heating barrel 11. In other words, the screw 20 is placed in the heating barrel 11 such that the center axis of the cylinder that is the shape of the heating barrel 11 and the rotation axis of the screw 20 substantially coincide with each other, and is placed to be movable in the axial direction of the heating barrel 11. The screw 20 placed to be rotatable in the heating barrel 11 can knead the molten resin by rotating in the interior of the heating barrel 11; thus, the heating barrel 11 forms a barrel capable of kneading the molten resin in its interior.

The hopper 18 is disposed at a position close to an end of the heating barrel 11 on a rear side. The hopper 18 communicates with the interior of the heating barrel 11, and can supply pellets (not illustrated) as a granular resin material to the heating barrel 11.

The rotation mechanism 40 is disposed rearward of the heating barrel 11 in the longitudinal direction Y, and can rotate the screw 20 disposed in the heating barrel 11 around a central axis. The rotation mechanism 40 that rotates the screw 20 includes a rotation mechanism main body portion 41, a drive electric motor 43, a drive belt 45, and a pulley 46.

The drive electric motor 43 is disposed, for example, above the rotation mechanism main body portion 41. The drive electric motor 43 includes an encoder 44 that detects a rotation speed of the drive electric motor 43. The encoder 44 provided in the drive electric motor 43 can detect a rotation speed of the screw 20 during melting of the resin material in the heating barrel 11 or metering of the resin material via the rotation speed of the drive electric motor 43.

The pulley 46 is disposed in front of the rotation mechanism main body portion 41 and is rotatably disposed relative to the rotation mechanism main body portion 41 via a bearing 47. In addition, the pulley 46 is connected to a drive shaft of the drive electric motor 43 via the drive belt 45 such that the pulley 46 can rotate by a drive force of the drive electric motor 43 transmitted via the drive belt 45 In this way, the pulley 46 that is rotatable by the drive force transmitted from the drive electric motor 43 is coaxially and integrally fixed to the screw 20. In other words, a rear end side of the screw 20 in the longitudinal direction Y is connected to the pulley 46. As a result, the screw 20 disposed in the heating barrel 11 can rotate integrally with the pulley 46 by the drive force transmitted from the drive electric motor 43 to the pulley 46.

The forward-backward movement mechanism 50 is placed in the rear of the rotation mechanism main body unit 41 in the longitudinal direction Y. The forward-backward movement mechanism 50 can move the screw 20 placed in the heating barrel 11 in the axial direction of the screw 20. That is, the screw 20 can be moved forward or backward in the longitudinal direction Y. Specifically, the forward-backward movement mechanism 50 includes a driving electric motor 51, a transmission belt 53, a pulley 54, and a ball screw mechanism 56.

The drive electric motor 51 includes an encoder 52 that detects a rotation position and a rotation speed of the drive electric motor 51, and a drive shaft of the drive electric motor 51 is connected to a pulley 54 via a drive belt 53. The encoder 52 provided in the drive electric motor 51 can detect a position of the screw 20 in a moving direction during injection of the resin material from the nozzle 12 of the heating barrel 11 via the rotation position of the drive electric motor 51. In addition, the encoder 52 provided in the drive electric motor 51 can detect an injection speed, which is a moving speed of the screw 20 during injection of the resin material from the nozzle 12 of the heating barrel 11, by detecting the rotation speed of the drive electric motor 51.

The pulley 54 is integrally connected to a threaded portion 57 of a ball screw mechanism 56. The threaded portion 57 of the ball screw mechanism 56 is disposed coaxially with the screw 20, and is also disposed coaxially with the pulley 46 provided in the rotation mechanism main body portion 41. A nut portion 58 of the ball screw mechanism 56 provided in an advancing and retracting mechanism 50 is formed in a substantially cylindrical shape, and the threaded portion 57 of the ball screw mechanism 56 is threadedly engaged with the nut portion 58.

A load cell 60 is placed between the nut unit 58 of the ball screw mechanism 56 included in the forward-backward movement mechanism 50 and the rotation mechanism main body unit 41 included in the rotation mechanism 40 in the longitudinal direction Y. The load cell 60 is placed on the rear side of the rotation mechanism main body unit 41 included in the rotation mechanism 40 and on the front side of the nut unit 58 of the ball screw mechanism 56 included in the forward-backward movement mechanism 50.

The load cell 60 is a load measuring instrument that measures a load applied in the axial direction, and is composed of a straining element and a strain sensor attached to the straining element (both not illustrated), etc. In the present embodiment, the load cell 60 is placed in a direction in which the axial direction is the longitudinal direction Y, and is formed in a substantially cylindrical shape flat in the longitudinal direction Y, and the inner diameter of the cylinder is larger than the outer diameter of the screw unit 57 of the ball screw mechanism 56 included in the forward-backward movement mechanism 50. For the load cell 60 thus formed, the surface on the front side in the longitudinal direction Y is integrally fixed to the rotation mechanism main body unit 41 included in the rotation mechanism 40, and the surface on the rear side in the longitudinal direction Y is integrally fixed to the nut unit 58 of the ball screw mechanism 56 included in the forward-backward movement mechanism 50.

The load cell 60 disposed between the rotation mechanism main body portion 41 of the rotation mechanism 40 and the nut portion 58 of the ball screw mechanism 56 provided in the advancing and retracting mechanism 50 can detect a load acting in the longitudinal direction Y between the rotation mechanism main body portion 41 and the nut portion 58. The load cell 60 can detect a pressure acting on the screw 20 during metering of the resin material in the heating barrel 11, or a pressure acting on the screw 20 during injection of the resin material from the nozzle 12, by detecting the load acting between the rotation mechanism main body portion 41 and the nut portion 58.

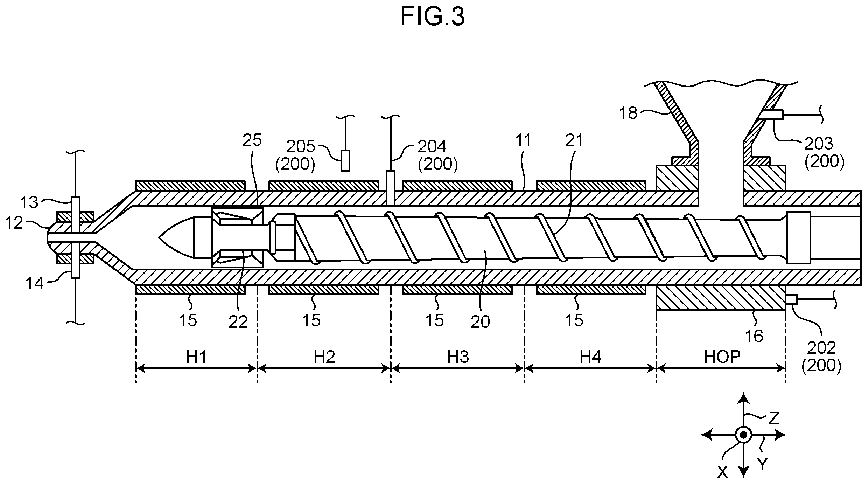

FIG. 3 is a detailed view of the heating barrel 11 illustrated in FIG. 2. As illustrated in FIG. 3, the heating barrel 11 is formed in a substantially cylindrical shape, and the heaters 15, such as band heaters, are arranged on an outer peripheral surface thereof. The plurality of heaters 15 are arranged in the longitudinal direction Y of the heating barrel 11, and can heat the resin material in the heating barrel 11. The type and the heating method of the heaters 15 are not particularly limited and may include, for example, a mica heater, a ceramic heater, an IH heater, a radiant heater, or a heater using a fluid as a heating medium.

The plurality of heaters 15 disposed in the longitudinal direction Y of the heating barrel 11 can perform temperature control independently from each other. Therefore, the heating barrel 11 includes a plurality of control zones where the temperature control can be independently performed. Each control zone corresponds to one of the heaters 15, and the plurality of control zones are arranged along the longitudinal direction Y similarly to the plurality of heaters 15.

In the present embodiment, the control zones include four control zones H1, H2, H3, and H4 from the side where the nozzle 12 is positioned toward the side where the hopper 18 is positioned in the longitudinal direction Y of the heating barrel 11. That is, H1 is a control zone for controlling the temperature of the distal end that is the end of the heating barrel 11 where the nozzle 12 is positioned, and H4 is a control zone for controlling a temperature at a position that is in front of the hopper 18 in the heating barrel 11 and is closest to the hopper 18.

Note that the number of control zones set to be arranged in the longitudinal direction Y of the heating barrel 11 may be other than four. That is, for example, three control zones may be set, or five or more control zones may be set.

In addition, a cooling unit 16 is disposed on the heating barrel 11. The cooling unit 16 is disposed on an outer peripheral surface at the position of the heating barrel 11 where the hopper 18 is disposed in the longitudinal direction Y. That is, the cooling unit 16 is disposed on a side opposite to the side where the nozzle 12 is positioned with respect to the heaters 15 in the longitudinal direction Y. In the cooling unit 16, a passage (not illustrated) through which a refrigerant such as cooling water flows is formed. By causing the refrigerant to flow through the passage in the cooling unit 16, the cooling unit 16 can cool the vicinity of the heating barrel 11 where the hopper 18 is disposed in the longitudinal direction Y.

The control zone where the temperature control of the heating barrel 11 is performed is also set at the position where the cooling unit 16 is disposed. The control zone set at the position where the cooling unit 16 is disposed is set as a HOP that is a control zone where the temperature of an inlet of the resin material in the heating barrel 11 is controlled.

The nozzle 12 disposed at a front end of the heating barrel 11 in the longitudinal direction Y is formed in a substantially cylindrical shape having an inner diameter smaller than an inner diameter of the heating barrel 11, and is disposed with an opening toward the front side in the longitudinal direction Y. In the nozzle 12, a resin temperature sensor 13 and a resin pressure sensor 14 are disposed. The resin temperature sensor 13 can detect the temperature of the molten resin passing through the interior of the nozzle 12. The resin pressure sensor 14 can detect the pressure of the molten resin in the nozzle 12, and can measure a resin pressure of the molten resin on which the metering in the heating barrel 11 is performed by detecting the pressure of the molten resin in the nozzle 12.

The screw 20 disposed in the heating barrel 11 includes a flight 21 that protrudes outward in a radial direction of the screw 20 and is helically formed with respect to the axis of the screw 20. As a result, the screw 20 has a helical groove-shaped portion between adjacent turns in the helically formed flight 21.

In the screw 20 thus formed, a check ring 25 is placed near the end on the front side in the longitudinal direction Y. The check ring 25 is placed in a groove portion 22 formed near the end on the front side in the longitudinal direction Y of the screw 20. The groove portion 22 is a groove formed over one circumference in the circumferential direction of the screw 20, with the groove width direction set to be the axial direction of the screw 20.

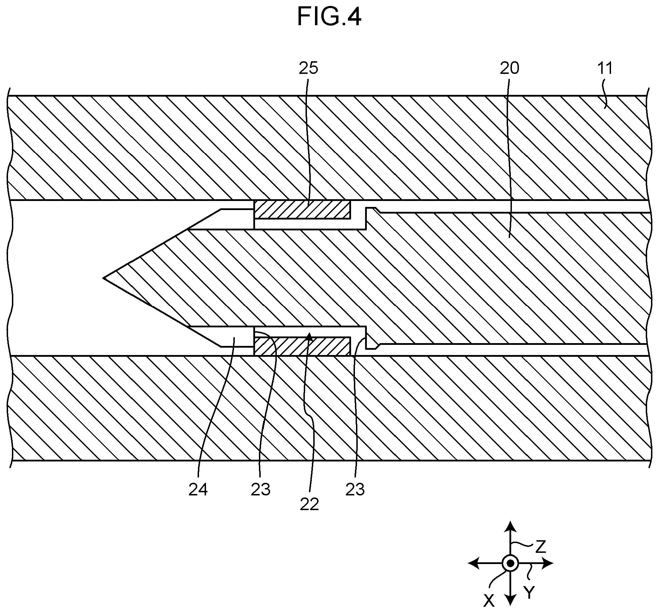

FIG. 4 is a detailed diagram of the check ring 25 illustrated in FIG. 3. The check ring 25 is formed in a substantially cylindrical shape, and is placed in the groove portion 22 of the screw 20 in a form in which the axis substantially coincides with the axis of the screw 20. The check ring 25 formed in a substantially cylindrical shape has an outer diameter substantially equal to the inner diameter of the heating barrel 11 and slightly smaller than the inner diameter of the heating barrel 11. The inner diameter of the check ring 25 is a diameter larger than the diameter of the groove bottom of the groove portion 22 of the screw 20, and a gap is formed between the inner peripheral surface of the check ring 25 and the groove bottom of the groove portion 22 of the screw 20. The width in the axial direction of the check ring 25 is smaller than the groove width of the groove portion 22 of the screw 20. Thus, the check ring 25 can move in the groove width direction in the groove portion 22.

Further, in the screw 20, communication portions 24 that allow the portion more on the front side in the longitudinal direction Y than the groove portion 22 and the interior of the groove portion 22 to communicate with each other are formed. The communication portions 24 are open to a groove wall 23 on the front side in the groove width direction of the groove portion 22.

In addition, the injection molding machine 1 includes a temperature disturbance sensor 200 that detects temperature disturbance when the resin material is melted by the injection device 10. That is, when the resin material is melted by the injection molding machine 1 for molding, the temperature disturbance sensor 200 can detect a temperature that may act as a disturbance to the melting of the resin material due to factors other than the heaters 15. In the present embodiment, as the temperature disturbance sensors 200, an ambient temperature sensor 201, a cooling water temperature sensor 202, a supplied resin temperature sensor 203, a barrel inner wall temperature sensor 204, and a heater-vicinity temperature sensor 205 are provided.

Among these, the ambient temperature sensor 201 (see FIG. 2) can detect the ambient temperature of the injection molding machine 1. The cooling water temperature sensor 202 (see FIG. 3) is provided in the cooling unit 16 disposed on the heating barrel 11, and can detect the temperature of the refrigerant flowing through the interior of the cooling unit 16, that is, the temperature of the cooling water. The supplied resin temperature sensor 203 (see FIG. 3) is disposed in the hopper 18 that supplies the resin material to the heating barrel 11, and can detect the temperature of the resin material before being supplied to the heating barrel 11.

The barrel inner wall temperature sensor 204 (see FIG. 3) is disposed on a wall surface of the heating barrel 11 to be exposed to an inner peripheral surface of the heating barrel 11, and can detect the temperature of an inner wall of the heating barrel 11. The heater-vicinity temperature sensor 205 (see FIG. 3) is disposed in the vicinity of the heaters 15 disposed on the heating barrel 11, and can detect the temperature in the vicinity of the heaters 15.

The ambient temperature sensor 201, the cooling water temperature sensor 202, the supplied resin temperature sensor 203, the barrel inner wall temperature sensor 204, and the heater-vicinity temperature sensor 205 that are provided as the temperature disturbance sensors 200 are all electrically connected to a control device 100, and can transmit each detection result to the control device 100.

### <Control Device 100>

The injection molding machine 1 includes the control device 100 that performs various types of control of the injection molding machine 1, an input unit 150 that allows an operator to perform an input operation to the injection molding machine 1, and a display unit 160 that displays various types of information. The input unit 150 and the display unit 160 are both connected to the control device 100, and the input unit 150 transmits the input information to the control device 100. In addition, the display unit 160 displays the information transmitted from the control device 100. The input unit 150 and the display unit 160 may be configured separately, or may be integrally formed by being configured as a so-called touch panel type display.

Various actuators such as a motor serving as a power source for operations in the injection molding machine 1, various sensors that acquire information during the operation of the injection molding machine 1, etc. are connected to the control device 100. Thereby, the control device 100 can control the injection molding machine 1 by transmitting a control signal to the actuators of the injection molding machine 1 while using the sensors to acquire information during the operation of the injection molding machine 1. The control device 100 can, for example, perform control of the pressure of the resin material in the mold 75 by performing movement control of the screw 20 when injecting the molten resin material from the nozzle 12 of the heating barrel 11.

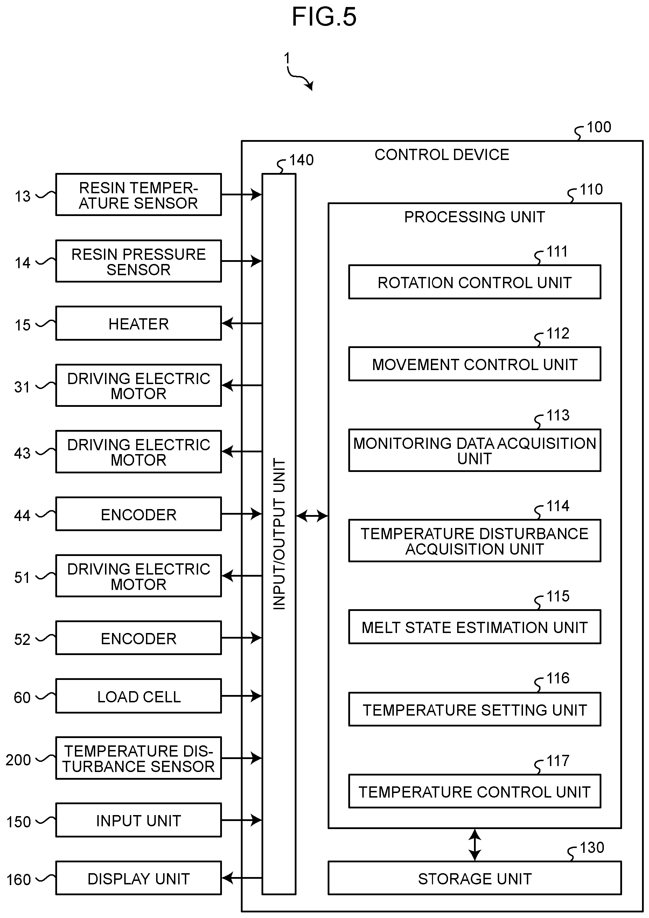

FIG. 5 is a diagram illustrating the control device 100 illustrated in FIG. 1. The control device 100 includes a processing unit 110, a storage unit 130, and an input/output unit 140. The processing unit 110 includes a CPU (Central Processing Unit) that performs arithmetic processing, a RAM (Random Access Memory), and a ROM (Read Only Memory) that function as memories storing various types of information, and the like. All or some of the functions of the processing unit 110 are implemented by loading an application program stored in the ROM to the RAM and executing the loaded application program to read and write data in the RAM and the ROM.

The storage unit 130 is a storage device that is electrically connected to the processing unit 110 and stores information. During the control of the injection molding machine 1 by the control device 100, information acquired from the injection molding machine 1 by the processing unit 110 or information calculated by the processing unit 110 may be stored in the storage unit 130, or information stored in the storage unit 130 may be called by the processing unit 110 to be used for the control of the injection molding machine 1.

In addition, in the present embodiment, the storage unit 130 stores information relating to the shape of the injection device 10. The information relating to the shape of the injection device 10 is used to control the melting of the resin material in the heating barrel 11. As the information relating to the shape of the injection device 10 stored in the storage unit 130, for example, a spacing of the flight 21 provided on the screw 20 in the longitudinal direction Y, a height of the flight 21 in the radial direction of the screw 20, a gradient of the height of the flight 21 that is the degree of a change in the height of the flight 21 in the longitudinal direction Y, the inner diameter of the heating barrel 11, a clearance between the inner peripheral surface of the heating barrel 11 and the flight 21, a helix angle of the helically formed flight 21, a helix angle of the flight 21 on the inner peripheral surface of the heating barrel 11, a length of the screw 20 in the longitudinal direction Y, and the like are stored.

Note that each function implemented by the processing unit 110 may be stored in advance in the storage unit 130 as a program. In this case, the processing unit 110 executes each function by calling the program stored in the storage unit 130 and executing an operation based on the program. In addition, the storage unit 130 may be provided integrally with the control device 100, or may be configured to be attachable to and detachable from the control device 100.

The input/output unit 140 is a so-called interface for inputting and outputting signals to and from an external device of the control device 100. That is, various actuators, various sensors, the input unit 150, and the display unit 160 of the injection molding machine 1 that are connected to the control device 100 are connected to the input/output unit 140. Examples of the actuators and various sensors connected to the input/output unit 140 include the heaters 15 of the heating barrel 11 provided in the injection device 10, the drive electric motor 31 of the propulsion mechanism 30, the drive electric motor 43 and the encoder 44 of the rotation mechanism 40, the drive electric motor 51 and the encoder 52 of the advancing and retracting mechanism 50, and the load cell 60. The processing unit 110 provided in the control device 100 transmits and receives signals to and from these external devices via the input/output unit 140.

Functionally, the processing unit 110 includes a rotation control unit 111, a movement control unit 112, a monitoring data acquisition unit 113, a temperature disturbance acquisition unit 114, a melt state estimation unit 115, a temperature setting unit 116, and a temperature control unit 117.

Among these, the rotation control unit 111 can perform rotation control of the screw 20 by performing drive control of the drive electric motor 43 provided in the rotation mechanism 40. When performing the rotation control of the screw 20, the rotation control unit 111 performs the drive control of the drive electric motor 43 while detecting the rotation speed of the screw 20 based on the detection result of the rotation speed of the drive electric motor 43 by the encoder 44 provided in the drive electric motor 43. As a result, the rotation control unit 111 can perform the rotation control of the screw 20 at a desired rotation speed.

The movement control unit 112 can perform movement control of the screw 20 in the longitudinal direction Y by performing drive control of the drive electric motor 51 provided in the advancing and retracting mechanism 50. When performing the movement control of the screw 20, the movement control unit 112 performs the drive control of the drive electric motor 51 while detecting the position of the screw 20 in the longitudinal direction Y based on the detection result of the rotation position and the rotation speed of the drive electric motor 51 by the encoder 52 provided in the drive electric motor 51. In addition, the movement control unit 112 also performs the drive control of the drive electric motor 51 using the detection result by the load cell 60. That is, since the load cell 60 can detect a pressure acting on the screw 20 during metering of the resin material in the heating barrel 11 or during injection of the resin material from the nozzle 12, the movement control unit 112 also performs the drive control of the drive electric motor 51 using the detection result of the pressure acting on the screw 20 that is detected by the load cell 60. As a result, the movement control unit 112 can perform the movement control of the screw 20 during metering of the resin material in the heating barrel 11 or during injection of the resin material while detecting a pressure of the resin material.

The monitoring data acquisition unit 113 can acquire monitoring data detected by the injection device 10 when the resin material is melted by the injection device 10. Examples of the monitoring data acquired by the monitoring data acquisition unit 113 include a metering time or a metering torque, a cycle time, a screw retraction speed, a screw rotation speed, a heater energization rate, an in-nozzle resin temperature, an in-nozzle resin pressure, a barrel temperature current value, a nozzle temperature current value, a lower-hopper temperature current value, a hold pressure switchover pressure, a maximum injection pressure, an injection start position, and a minimum cushion position.

Among these monitoring data, the metering time is a metering time when the metering of the resin material in the heating barrel 11 is performed, and is acquired from acquiring a drive time of the drive electric motor 51 when the movement control unit 112 controls the drive electric motor 51 of the advancing and retracting mechanism 50.

The metering torque is a rotation torque of the screw 20 when metering of the resin material in the heating barrel 11 is performed while rotating the screw 20, and is acquired based on a current value of the drive electric motor 43 when the rotation control unit 111 performs the drive control of the drive electric motor 43 of the rotation mechanism 40.

The cycle time is acquired from the movement control unit 112 as a time taken for one cycle when the movement control unit 112 performs movement control of the screw 20 in the longitudinal direction Y by performing the drive control of the drive electric motor 51 provided in the advancing and retracting mechanism 50 during injection molding by the injection molding machine 1.

The screw retraction speed is acquired as a moving speed of the screw 20 toward the rear side in the longitudinal direction Y when the resin material is fed to the front side while melting the resin material by moving the screw 20 to the rear side in the longitudinal direction Y while rotating the screw 20 in the heating barrel 11 during injection molding by the injection molding machine 1. When the screw retraction speed is acquired by the monitoring data acquisition unit 113, the screw retraction speed is acquired based on the rotation speed of the drive electric motor 51 detected by the encoder 52 disposed in the drive electric motor 51 provided in the advancing and retracting mechanism 50. Alternatively, the screw retraction speed may be acquired by calculation from the above-described metering time and a value of a moving distance of the screw 20 to the rear side in the longitudinal direction Y that is detected based on a detection result from the encoder 52 disposed in the drive electric motor 51 provided in the advancing and retracting mechanism 50.

The screw rotation speed is acquired as a rotation speed of the screw 20 based on the rotation speed of the drive electric motor 43 by acquiring a detection result from the encoder 44 disposed in the drive electric motor 43 provided in the rotation mechanism 40.

The heater energization rate is acquired from the temperature control unit 117 as an energization rate for the heaters 15, when the temperature control unit 117 performs temperature control of the heaters 15 disposed on the heating barrel 11 as described below. That is, the temperature control of the heating barrel 11 is performed by feedback control based on a PID (Proportional-Integral-Derivative) control operation. Therefore, when the heater energization rate is acquired from the monitoring data acquisition unit 113, the heater energization rate based on the PID calculation result is acquired from the temperature control unit 117.

The in-nozzle resin temperature is acquired as a temperature of the molten resin passing through the interior of the nozzle 12 based on a detection result from the resin temperature sensor 13 disposed in the nozzle 12 disposed at the front end of the heating barrel 11.

The in-nozzle resin pressure is acquired as a pressure of the molten resin in the nozzle 12 based on a detection result from the resin pressure sensor 14 disposed in the nozzle 12 disposed at the front end of the heating barrel 11.

The barrel temperature current value is a current temperature of the heating barrel 11 at a certain time point in one cycle relative to a set temperature of each control zone of the heaters 15, and is acquired, for example, based on a detection result from a temperature sensor (not illustrated) provided for each of the heaters 15 disposed on the heating barrel 11.

The nozzle temperature current value is a current temperature of the nozzle 12 at a certain time point in one cycle relative to a set temperature of each control zone of the heaters 15, and is acquired, for example, based on a detection result from a temperature sensor (not illustrated) provided for each of the heaters 15 disposed on the nozzle 12.

The lower-hopper temperature current value is a current temperature at a certain time point in one cycle relative to a set temperature of the barrel portion temperature control zone positioned immediately below the hopper 18 and in the cooling unit 16, and is acquired based on a detection result from the cooling water temperature sensor 202 disposed in the cooling unit 16.

The hold pressure switchover pressure is a resin pressure in the heating barrel 11 during switchover from the movement control of the screw 20 by the encoder 52 disposed in the drive electric motor 51 provided in the advancing and retracting mechanism 50 to the movement control by the load cell 60 when the molten resin material is injected into the mold 75, and is acquired based on a detection result from the load cell 60 when the movement control is switched.

The maximum injection pressure is a maximum value of a resin pressure in the heating barrel 11 detected by the load cell 60 when the molten resin material is injected into the mold 75, and is acquired based on a detection result from the load cell 60.

The injection start position is a position of the screw 20 when the screw 20 starts advancing during injection of the molten resin material into the mold 75, and is acquired based on a detection result from the encoder 52 disposed in the drive electric motor 51 provided in the advancing and retracting mechanism 50.

The minimum cushion position is the most advanced position of the screw 20 when the molten resin material is injected into the mold 75, and is acquired based on a detection result from the encoder 52 disposed in the drive electric motor 51 provided in the advancing and retracting mechanism 50.

The monitoring data acquisition unit 113 acquires the monitoring data for each cycle when a molded product is molded by the injection molding machine 1, and stores the acquired monitoring data in the storage unit 130 provided in the control device 100.

The temperature disturbance acquisition unit 114 can acquire temperature disturbance from the temperature disturbance sensor 200. In the present embodiment, the ambient temperature sensor 201, the cooling water temperature sensor 202, the supplied resin temperature sensor 203, the barrel inner wall temperature sensor 204, and the heater-vicinity temperature sensor 205 are provided as the temperature disturbance sensors 200. Therefore, the temperature disturbance acquisition unit 114 can acquire plural types of temperature disturbances by acquiring detection results from the temperature disturbance sensors 200. The temperature disturbance acquisition unit 114 acquires the plural types of temperature disturbances detected by the plurality of temperature disturbance sensors 200 for each cycle when a molded product is molded by the injection molding machine 1, and stores the acquired plural types of temperature disturbances in the storage unit 130 provided in the control device 100.

The melt state estimation unit 115 can estimate a resin melt state that is a melt state of the resin material in the heating barrel 11 based on the monitoring data acquired by the monitoring data acquisition unit 113.

The resin melt state described herein is a value relating to a result of the amount of heat applied to the resin material, and changes depending on the amount of heat applied to the resin material. Examples of the resin melt state include an in-barrel resin melting start position, an in-barrel resin temperature, an in-barrel resin pressure, an in-barrel resin melting speed, and a molten resin viscosity.

Among these, the in-barrel resin melting start position is a position in the longitudinal direction Y at a portion where the solid resin material starts to melt in the heating barrel 11 when the resin material is melted in the heating barrel 11.

The in-barrel resin temperature is a temperature of the resin material at an arbitrary position in the longitudinal direction Y in the heating barrel 11.

The in-barrel resin pressure is a pressure of the resin material at an arbitrary position in the longitudinal direction Y in the heating barrel 11.

The in-barrel resin melting speed is a melting speed at an arbitrary position in the longitudinal direction Y in the heating barrel 11 when the solid resin material melts.

The molten resin viscosity is a viscosity of the molten resin material in the heating barrel 11.

The melt state estimation unit 115 estimates these resin melt states based on the monitoring data acquired by the monitoring data acquisition unit 113. The melt state estimation unit 115 estimates the resin melt state from the monitoring data using a predetermined arithmetic expression. The arithmetic expression for estimating the resin melt state is predetermined and stored in the storage unit 130 provided in the control device 100.

Further, in the present embodiment, the melt state estimation unit 115 estimates the resin melt state using not only the monitoring data but also the temperature disturbance. That is, the melt state estimation unit 115 estimates the resin melt state based on the monitoring data acquired by the monitoring data acquisition unit 113 and the temperature disturbance acquired by the temperature disturbance acquisition unit 114. That is, using the arithmetic expression stored in the storage unit 130, the melt state estimation unit 115 estimates the resin melt state based on the monitoring data acquired by the monitoring data acquisition unit 113 and the temperature disturbance acquired by the temperature disturbance acquisition unit 114.

The temperature setting unit 116 performs temperature setting for each of the heaters 15 based on the resin melt state estimated by the melt state estimation unit 115, the temperature setting being performed when the resin material is melted in the heating barrel 11. That is, the plurality of heaters 15 are arranged on the heating barrel 11, and the temperature setting unit 116 performs temperature setting for each of the heaters 15 based on the resin melt state estimated by the melt state estimation unit 115, the temperature setting being performed when the temperature control of the plurality of heaters 15 is performed. In other words, the temperature setting unit 116 can perform temperature setting for each of the plurality of control zones set in the heating barrel 11.

The temperature control unit 117 performs temperature control of the plurality of heaters 15 disposed on the heating barrel 11, for each of the heaters 15, based on the temperature setting performed for each of the heaters 15 by the temperature setting unit 116. The temperature control unit 117 performs temperature control of the heaters 15 for each of the heaters 15 by feedback control based on the PID control operation.

### <Action of Injection Molding Machine 1>

The injection molding machine 1 according to the present embodiment has the above-described configuration, and an action thereof will be described below. With one injection and molding operation defined as one cycle, the injection molding machine 1 repeatedly executes the cycle of the injection and molding operation. Each cycle includes a plurality of steps for injecting a molding material and molding a product. Each cycle includes, for example, a mold closing step, a filling step, a hold pressure step, a metering step, a mold opening step, and an ejection step.

The mold closing step is a step of moving the movable platen 72 included in the mold clamping device 70 in a direction toward the stationary platen 71 to combine the movable mold 77 and the stationary mold 76 and forming a cavity 75a corresponding to the product shape between the movable mold 77 and the stationary mold 76.

The filling step is a step of injecting a molten resin that is a resin material melted by the heating barrel 11 of the injection device 10 into the cavity 75a formed by the movable mold 77 and the stationary mold 76 installed in the mold clamping device 70.

The hold pressure step is a step of standing by in a state where a pressure of a molding resin, which is a resin material injected into the cavity 75a formed by the movable mold 77 and the fixed mold 76 attached to the mold clamping device 70 is maintained, and maintaining the stand-by state for a given time until the molding resin is solidified to become a molded product by reducing the temperature of the molding resin.

The metering step is a step of feeding a resin material to be injected in the next cycle toward an end side where the nozzle 12 in the heating barrel 11 provided in the injection device 10 is positioned, and preparing a resin material to be used for the next cycle.

The mold opening step is a step of, in order to extract the molded product molded by the stationary mold 76 and the movable mold 77 installed in the mold clamping device 70, moving the movable platen 72 in a direction away from the stationary platen 71 to separate the movable mold 77 from the stationary mold 76.

The extraction step is a step of, after separating the movable mold 77 from the stationary mold 76, extruding the molded product stuck to the movable mold 77 by means of the extrusion member 86 included in the extrusion mechanism 85 and thereby extracting the molded product from the metal mold 75.

When a molded product is molded by the injection molding machine 1, the cycle of the injection and molding operation is repeatedly executed. In the repeatedly executed cycle, the injection molding machine 1 continuously melts the resin material, which is supplied into the heating barrel 11 in a solid state, in the heating barrel 11.

The melting of the resin material in the heating barrel 11 is performed by causing the temperature control unit 117 provided in the processing unit 110 of the control device 100 to control the heaters 15 disposed on the heating barrel 11, and by causing the heaters 15 to generate heat to increase the temperature of the resin material in the heating barrel 11. At this time, the temperature control unit 117 performs the temperature control of the heaters 15 for each of the plurality of heaters 15 disposed on the heating barrel 11. As a result, the temperature control unit 117 performs the temperature control for each control zone of the heating barrel 11 to adjust the temperature at each position of the heating barrel 11 in the longitudinal direction Y to a temperature suitable for the position.

Specifically, the temperature of the heating barrel 11 is controlled to increase from the side where the hopper 18 supplying the solid resin material into the heating barrel 11 is positioned toward the side where the nozzle 12 injecting the molten resin material outside the heating barrel 11 is positioned. As a result, the resin material supplied into the heating barrel 11 in a solid pellet state is heated while being fed from the side where the hopper 18 is positioned toward the side where the nozzle 12 is positioned in the longitudinal direction Y by the rotating screw 20, and is melted while moving in the heating barrel 11 toward the side where the nozzle 12 is positioned.

In the heating barrel 11, the resin material is fed by the rotating screw 20 from the side where the hopper 18 is positioned toward the side where the nozzle 12 is positioned. In this case, the resin material is fed toward the side where the nozzle 12 is positioned by the rotation of the screw 20 where the helically formed flight 21 is disposed. At this time, the resin material is kneaded by the flight 21 disposed on the screw 20 while being fed in the heating barrel 11 in the longitudinal direction Y. Therefore, frictional heating due to friction between the resin materials, shear heating due to shearing of the molten resin material, or the like occur in the resin material, and the temperature of the resin material increases not only due to heat generated from the heaters 15 but also due to heat generated by the movement of the resin material.

The temperature of the resin material also increases due to the shear heating or the like of the resin material as described above, and the resin material is also melted by the amount of heat at this time. However, since the amount of heat of the shear heating or the like depends on the physical properties of the resin material and the supply status of pellets, it is difficult to control the amount of heat of the shear heating or the like. The temperature in the heating barrel 11 is adjusted by controlling the heaters 15. In this case, when the temperature in the heating barrel 11 is inappropriate for the melting of the resin material due to the influence of the shear heating or the like of the resin material, there is a possibility that the production may become unstable due to the occurrence of molding failure caused by an insufficient amount of heat or an excess amount of heat of the molten resin material.

In Patent Document 1, the temperature of a zone Z4 closest to a nozzle portion of a heating cylinder main body portion is set by an operator inputting a set temperature, and the temperatures of the other zones Z3, Z2, and Z1 are obtained by calculation based on molding conditions and are automatically set. However, even when the set temperature of each zone is obtained based on the molding conditions, shear heating or the like that occurs along with the kneading of the resin material by the screw 20 may change during melting of the resin material depending on the supply status or the like of the pellets. Therefore, the actual temperature of the resin material may change from a desired temperature due to the influence of the shear heating or the like, and there is a possibility that it may be difficult to maintain the temperature of the resin material at an appropriate temperature for the melting of the resin material.

On the other hand, in the injection molding machine 1 according to the present embodiment, the resin melt state is estimated based on the monitoring data while the operation of melting the resin material to mold a molded product is being performed, and the temperature setting for the heaters 15 is performed based on the estimated resin melt state. As a result, the temperature of the resin material can be maintained at an appropriate temperature for the melting. Next, the temperature control of the heating barrel 11 in the injection molding machine 1 according to the embodiment will be described.

### <Temperature Control of Heating Barrel 11>

In the injection molding machine 1 according to the embodiment, the temperature setting for the distal end of the heating barrel 11 is performed based on an input from outside the injection device 10, and the temperature setting for positions other than the distal end of the heating barrel 11 is automatically performed by the control device 100 based on the monitoring data.

The temperature setting for the distal end of the heating barrel 11, that is, the temperature setting for a control zone H1 (see FIG. 3) in the heating barrel 11 is performed through an input operation of an operator to the input/output unit 140. For example, by the operator inputting a temperature recommended for the type of the resin material to the input/output unit 140, the temperature of the control zone H1 is acquired by the temperature setting unit 116 provided in the processing unit 110 of the control device 100.

The temperature setting unit 116 sets the temperature, which has been input as the temperature of the control zone H1, as the temperature of the heaters 15 disposed in the control zone H1. During the operation of the injection molding machine 1, the temperature control unit 117 provided in the processing unit 110 of the control device 100 controls the heater 15 disposed in the control zone H1 at the temperature set by the temperature setting unit 116 as the temperature of the heater 15, thereby performing the temperature control of the control zone H1.

On the other hand, once the temperature of the control zone H1 is set, the temperature setting for portions other than the distal end of the heating barrel 11, that is, the temperature setting for control zones H2 to H4 (see FIG. 3) in the heating barrel 11 is automatically performed according to an arbitrary temperature gradient. That is, once the temperature of the control zone H1 is set through the input operation of the operator, the temperature control unit 117 sets the temperatures of the control zones H2 to H4 through an arbitrary temperature gradient based on the set temperature of the control zone H1. In this case, the temperature gradient may be set through the input operation of the operator to the input/output unit 140 similarly to the control zone H1, or the temperature gradient may be preset and stored in the storage unit 130 to perform the temperature setting for the control zones H2 to H4 using the temperature gradient stored in the storage unit 130.

Once the temperature setting for each control zone is performed by the temperature setting unit 116, a molded product is molded by the injection molding machine 1 while the temperature control unit 117 provided in the processing unit 110 of the control device 100 is performing the temperature control of the heaters 15 at the set temperature. During the molding of the molded product by the injection molding machine 1, the molded product is continuously produced by repeating the above-described cycle.

In the control device 100 of the injection molding machine 1, while molding the molded product, the monitoring data is acquired by the monitoring data acquisition unit 113 provided in the processing unit 110, and the temperature disturbance is acquired by the temperature disturbance acquisition unit 114.

The monitoring data acquisition unit 113 that acquires the monitoring data during the operation of the injection molding machine 1 acquires, as the monitoring data, for example, the metering time, the metering torque, the cycle time, the screw retraction speed, the screw rotation speed, the heater energization rate, the in-nozzle resin temperature, the in-nozzle resin pressure, or the like. In addition, the temperature disturbance acquisition unit 114 that acquires the temperature disturbance during the operation of the injection molding machine 1 acquires, as the temperature disturbance, for example, the ambient temperature, the cooling water temperature, the supplied resin temperature, the in-barrel inner wall temperature, the heater-vicinity temperature, and the like.

Once the monitoring data is acquired by the monitoring data acquisition unit 113 and the temperature disturbance is acquired by the temperature disturbance acquisition unit 114, the resin melt state that is the melt state of the resin material in the heating barrel 11 is estimated by the melt state estimation unit 115 provided in the processing unit 110 of the control device 100. The melt state estimation unit 115 estimates the resin melt state based on the monitoring data acquired by the monitoring data acquisition unit 113 and the temperature disturbance acquired by the temperature disturbance acquisition unit 114. Note that the resin melt state can also be estimated without using the temperature acquired by the temperature disturbance acquisition unit 114, but it is desired to use the temperature acquired by the temperature disturbance acquisition unit 114 from the viewpoint of improving the accuracy of the estimation.

The melt state estimation unit 115 acquires, as the resin melt state, for example, the in-barrel resin melting start position, the in-barrel resin temperature at an arbitrary position in the heating barrel 11, the in-barrel resin pressure at an arbitrary position in the heating barrel 11, the in-barrel resin melting speed at an arbitrary position in the heating barrel 11, the molten resin viscosity, and the like.

The melt state estimation unit 115 estimates the resin melt states from the monitoring data and the temperature disturbance using the arithmetic expression that is predetermined and stored in the storage unit 130. As the arithmetic expression used for estimating the resin melt state, the resin melting theory of an extrusion molding machine proposed by Tadmor is applied to the injection molding machine 1 to be used. Among the resin melt states estimated by the melt state estimation unit 115, the in-barrel resin melting start position is estimated using, for example, Expression (1) below.
[Math. 1] $\frac{X}{W} = {\left[\frac{Ψ}{A}-\left(\frac{Ψ}{A}-1\right)\sqrt{\frac{H}{H - {A}_{z}}}\right]}^{2}$

In Expression (1), X represents a solid bed width that is a width of the resin material in the longitudinal direction Y in a solid state in the resin material entering between portions of the flight 21 provided in the screw 20, the portions being adjacent to each other in the longitudinal direction Y at the same position in the peripheral direction of the screw 20. W represents a spacing of portions of the flight 21 provided in the screw 20, the portions being adjacent to each other in the longitudinal direction Y at the same position in the peripheral direction of the screw 20. Ψ represents a function of the melting speed of the resin material, which is w_{L}(z) in Expression (4) described below.

H represents a height of the flight 21 provided in the screw 20 in the radial direction of the screw 20. A represents a gradient of the height of the flight 21 represented by heights of the flight 21 at an upstream end and a downstream end in a range where the resin material is transported in the axial direction of the screw 20 and a distance between the ends in the axial direction of the screw 20. A_{Z} represents a gradient of the height of the flight 21 represented by the distance in the axial direction of the screw 20.

In Expression (1), among the monitoring data acquired by the monitoring data acquisition unit 113, monitoring data such as the metering time, the cycle time, the screw retraction speed, the heater energization rate, and the metering torque are used. In addition, among the values used in Expression (1), the values stored in the storage unit 130 are used as the spacing W of the flight 21 in the longitudinal direction Y, the flight 21 height H, and the gradient A_{Z} of the height of the flight 21. In addition, Ψ in Expression (1) is W_{L}(z) in Expression (4) below. In Expression (4), w_{L}(z) is calculated using the temperature disturbance acquired by the temperature disturbance acquisition unit 114. Therefore, Expression (1) is a numerical expression for estimating the in-barrel resin melting start position using the monitoring data acquired by the monitoring data acquisition unit 113 and the temperature disturbance acquired by the temperature disturbance acquisition unit 114.

As for the in-barrel resin melting start position, a position where the result of calculation using Expression (1) satisfies X/W < 1 is a melting start position of the resin material in the heating barrel 11. The melt state estimation unit 115 uses, as the resin melt state, the melting start position of the resin material in the heating barrel 11 calculated as described above.

In addition, among the resin melt states estimated by the melt state estimation unit 115, the in-barrel resin pressure at an arbitrary position in the heating barrel 11 is estimated using, for example, Expression (2) below.
[Math. 2] $Δ P = \frac{0.5 μπ N {D}_{b} cos {θ}_{b} W \left(W-{δ}_{f}\right) {F}_{d}}{K + \left[W{H}^{3}sinθ\left(1+{f}_{L}\right){F}_{p}\right] / 12 L}$

In Expression (2), ΔP represents a pressure change of the resin material from the position where the hopper 18 is disposed in the heating barrel 11. N represents the rotation speed of the screw 20. D_{b} represents the inner diameter of the heating barrel 11. W represents a spacing of portions of the flight 21 provided in the screw 20, the portions being adjacent to each other in the longitudinal direction Y at the same position in the peripheral direction of the screw 20. δ_{f} represents the clearance between the inner peripheral surface of the heating barrel 11 and the flight 21. H represents a height of the flight 21 provided in the screw 20 in the radial direction of the screw 20.

K represents a discharge coefficient. The discharge coefficient described herein is a representation, in terms of shape, of a pressure loss at a resin outlet that is a flow path at the tip of the nozzle 12. F_{d} represents a shape factor for drag flow. The shape factor for drag flow is a representation, in terms of flow path shape, of the reduction in drag flow at the resin outlet. Fₚ represents a shape factor for pressure flow. The shape factor for pressure flow is a representation, in terms of flow path shape, of the reduction in pressure flow at the resin outlet. f_{L} represents a leakage coefficient for pressure flow. The leakage coefficient for pressure flow described herein is a representation, in terms of coefficient, of the proportion of the amount of the resin flowing back toward the hopper 18 side from the clearance between the outer periphery of the check ring 25 or the outer periphery of the flight 21 disposed on the screw 20 and the inner peripheral surface of the heating barrel 11. θ_{b} represents the helix angle of the flight 21 on the inner peripheral surface of the heating barrel 11, which is an angle when the helix of the outer peripheral portion of the flight 21 provided in the screw 20 is projected onto the inner peripheral surface of the heating barrel 11. θ represents the angle of the helix itself of the flight 21 provided in the screw 20. That is, the helix angle θ of the flight 21 changes due to rounding of a portion functioning as a root of the flight 21 when the flight 21 is viewed in the height direction of the flight 21. L represents the length of the screw 20 in the longitudinal direction Y.

In Expression (2), among the monitoring data acquired by the monitoring data acquisition unit 113, the rotation speed of the screw 20 is used. In addition, among the values used in Expression (2), the values stored in the storage unit 130 are used as the inner diameter D_{b} of the heating barrel 11, the spacing W of the flight 21 in the longitudinal direction Y, the clearance δ_{f} between the inner peripheral surface of the heating barrel 11 and the flight 21, the flight 21 height H, the helix angle θ_{b} of the flight 21 projected onto the inner peripheral surface of the heating barrel 11, and the helix angle θ of the flight 21.

As for the in-barrel resin pressure, ΔP calculated by Expression (2) is estimated as a pressure of the resin material at an arbitrary position in the heating barrel 11. The melt state estimation unit 115 uses, as the resin melt state, the pressure of the resin material at an arbitrary position in the heating barrel 11 calculated as described above.

In addition, among the resin melt states estimated by the melt state estimation unit 115, the in-barrel resin temperature at an arbitrary position in the heating barrel 11 is estimated using, for example, Expression (3) below.
[Math. 3] $Δ T = \frac{1}{{C}_{p}} \frac{{E}_{v}}{ρ Q}$

In Expression (3), ΔT represents a temperature change of the resin material from the position where the hopper 18 is disposed in the heating barrel 11. Cₚ represents a resin specific heat when the pressure of the resin material is constant. Eᵥ represents a heat conversion ratio of kinetic energy. The heat conversion ratio of kinetic energy described herein represents a ratio of kinetic energy converted into heat energy when kinetic energy applied to the molten resin is converted into both deformation of the resin and heat energy. ρ represents the density of the molten resin material. Q represents a mass flow rate of the molten resin material, and is calculated using w_{L}(z) in Expression (4) described below.

In Expression (3), among the monitoring data acquired by the monitoring data acquisition unit 113, monitoring data such as the metering time, the cycle time, the screw retraction speed, the heater energization rate, the barrel temperature, and the metering torque are used. In addition, Q in Expression (3) represents a value calculated using w_{L}(z) in Expression (4) below. In Expression (4), w_{L}(z) is calculated using the temperature disturbance acquired by the temperature disturbance acquisition unit 114. Therefore, Expression (3) is a numerical expression for estimating the in-barrel resin temperature using the monitoring data acquired by the monitoring data acquisition unit 113 and the temperature disturbance acquired by the temperature disturbance acquisition unit 114.

As for the in-barrel resin temperature, ΔT calculated by Expression (3) is estimated as a temperature of the resin material at an arbitrary position in the heating barrel 11. The melt state estimation unit 115 uses, as the resin melt state, the temperature of the resin material at an arbitrary position in the heating barrel 11 calculated as described above.

In addition, among the resin melt states estimated by the melt state estimation unit 115, the in-barrel resin melting speed at an arbitrary position in the heating barrel 11 is estimated using, for example, Expression (4) below.
[Math. 4] ${w}_{L} \left(z\right) = {\left\{\frac{{V}_{bx} {ρ}_{m} \left[{k}_{m}\left({T}_{b}-{T}_{m}\right)+\left(μ/2\right){V}_{j}^{2}\right] X}{2 \left[λ+{C}_{s}\left({T}_{m}-{T}_{s 0}\right)+{C}_{m}{Θ}_{ave}\left({T}_{b}-{T}_{m}\right)\right]}\right\}}^{1 / 2}$

In Expression (4), w_{L}(z) represents the in-barrel resin melting speed at an arbitrary position in the heating barrel 11. V_{bx} represents a cross-channel velocity component of a barrel speed. The cross-channel velocity component of the barrel speed will be described. Since the flight 21 provided in the screw 20 is helically formed, the flow path through which the resin flows in the screw 20 is inclined with respect to the rotation direction of the screw 20. The cross-channel velocity component of the barrel speed represents a speed when the rotation speed of the screw 20 is applied in a groove width direction of the flow path through which the resin flows, that is, in a groove width direction partitioned between the flights 21. Vⱼ represents a relative speed between the heating barrel 11 and a solid bed that is the resin material in a solid state. X represents a solid bed width. Θₐᵥₑ represents a dimensionless temperature. T_{b} represents a temperature in the heating barrel 11.

Tₘ represents the melting point of the resin material. Tₛ₀ represents a temperature of the solid resin material. ρₘ represents the density of the molten resin material. kₘ represents the thermal conductivity of the molten resin. µ represents the viscosity of the molten resin material. λ represents the heat of fusion of the resin material. Cₛ represents the specific heat of the solid resin material. Cₘ represents the specific heat of the molten resin material.

In Expression (4), among the monitoring data acquired by the monitoring data acquisition unit 113, monitoring data such as the metering time, the cycle time, the screw retraction speed, the heater energization rate, the barrel temperature, and the metering torque are used. In addition, as the temperature T_{b} in the heating barrel 11 among the values used in Expression (4), a value that is detected by the barrel inner wall temperature sensor 204, is acquired by the temperature disturbance acquisition unit 114, and is stored in the storage unit 130 is used. In addition, as the temperature Tₛ₀ of the solid resin material, a value that is detected by the supplied resin temperature sensor 203, is acquired by the temperature disturbance acquisition unit 114, and is stored in the storage unit 130 is used.

The melt state estimation unit 115 uses, as the resin melt state, the in-barrel resin melting speed at an arbitrary position in the heating barrel 11 calculated as described above. That is, the melt state estimation unit 115 estimates the resin melt state based on the monitoring data acquired by the monitoring data acquisition unit 113 and the temperature disturbance acquired by the temperature disturbance acquisition unit 114.

The temperature setting unit 116 provided in the control device 100 performs temperature setting for each heater 15 based on the resin melt state estimated by the melt state estimation unit 115 as described above.

As for the temperature setting for the heater 15 that is performed by the temperature setting unit 116 based on the resin melt state, when the estimated resin melt state exceeds a threshold, it is determined that the amount of heat is excessive, insufficient, or unstable, and the temperature setting is performed for each heater 15 such that the resin melt state falls within the range of the threshold.

The threshold of the resin melt state is set as an upper limit and a lower limit with respect to the value of the resin melt state when the amount of heat applied to the resin material during melting of the resin material in the heating barrel 11 is appropriate. For example, when Expression (1) for estimating the in-barrel resin melting start position, Expression (2) for estimating the in-barrel resin pressure at an arbitrary position in the heating barrel 11, Expression (3) for estimating the in-barrel resin temperature at an arbitrary position in the heating barrel 11, Expression (4) for estimating the in-barrel resin melting speed at an arbitrary position in the heating barrel 11, and the like described above are used as for estimating the resin melt state, an upper limit and a lower limit are set as the threshold with respect to the values calculated from these expressions when the amount of heat applied to the resin material during melting of the resin material in the heating barrel 11 is appropriate. That is, for example, it is assumed that the values calculated from these expressions are represented by an index in which a value when the amount of heat applied to the resin material during melting of the resin material in the heating barrel 11 is appropriate is set to 100, and the threshold of the resin melt state is ±10% of the value when the amount of heat is appropriate. In this case, when the index of the value calculated from the above-described expressions is 90 or more and 110 or less, the value of the resin melt state is determined to be within the range of the threshold, and when the index is less than 90 or exceeds 110, the value of the resin melt state is determined to be outside the range of the threshold. The threshold of the resin melt state set as described above is set in advance for each of the expressions used for estimating the resin melt state, and is stored in the storage unit 130.

When the resin melt state estimated by the melt state estimation unit 115 exceeds the threshold of the resin melt state set as described above, the temperature setting unit 116 performs the temperature setting for the heaters 15 by performing an inverse calculation of the resin melt state such that the resin melt state falls within the range of the threshold. That is, for example, when the resin melt states estimated using Expressions (1) to (4) above exceed the thresholds, inverse calculations of the expressions used for estimating the resin melt states are performed by setting the monitoring data other than the barrel temperature to fixed values and setting the barrel temperature to a variable, to calculate a barrel temperature at which the values of the resin melt states fall within the thresholds. Based on the calculated barrel temperature, the temperature setting unit 116 performs temperature setting for each heater 15 to realize the calculated barrel temperature.

In addition, the temperature setting unit 116 performs the temperature setting for the heater 15 not only based on the resin melt state but also based on the monitoring data and the temperature disturbance. As for the temperature setting for the heater 15 that is performed by the temperature setting unit 116 based on the monitoring data and the temperature disturbance, when the monitoring data or the temperature disturbance exceeds each of the thresholds, it is determined that the amount of heat is excessive, insufficient, or unstable. In this case, the temperature setting is performed for each heater 15 such that the resin melt state falls within the range of the threshold.

The determination of whether or not the resin melt state, monitoring data, and the temperature disturbance exceed the respective thresholds is performed for each cycle. In addition, the thresholds of the resin melt state, the monitoring data, and the temperature disturbance are preset for each type of the resin melt state, each type of the monitoring data, and each type of the temperature disturbance, and are stored in the storage unit 130.

The temperature control unit 117 provided in the processing unit 110 of the control device 100 performs temperature control for each control zone by performing control for each heater 15 at the temperature set as described above. As a result, a temperature suitable for each control zone of the heating barrel 11 is set, and molding of a molded product is continued in a state where the amount of heat is not excessive or insufficient for the resin material.

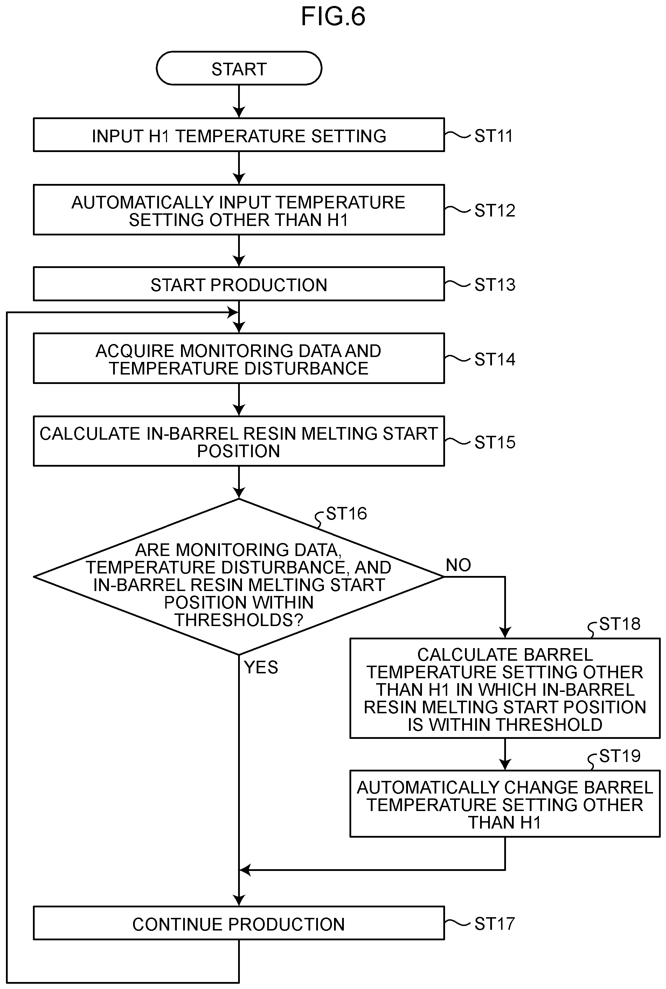

Next, as described above, a control procedure for molding a molded product using the injection molding machine 1 while performing the temperature setting for the heating barrel 11 will be described with reference to a flowchart. FIG. 6 is a flowchart illustrating the control procedure when the injection molding machine 1 according to the embodiment performs molding. Note that the flowchart illustrated in FIG. 6 illustrates a control procedure for estimating the in-barrel resin melting start position, as an example of the resin melt state estimated by the melt state estimation unit 115 provided in the processing unit 110 of the control device 100.

When a molded product is molded by the injection molding machine 1, first, an operator inputs temperature setting for the control zone H1 (Step ST11). As for the temperature setting for H1, for example, the operator inputs a recommended temperature of a material resin to be used via the input/output unit 140, and stores the recommended temperature in the storage unit 130.

Next, temperature setting for control zones other than H1 is automatically input (Step ST12). The temperatures of the control zones other than H1 are set by the temperature setting unit 116 provided in the processing unit 110 of the control device 100, for example, according to the temperature gradient that is preset and stored in the storage unit 130, based on the temperature of H1 as a reference. The temperatures of the control zones other than H1 set by the temperature setting unit 116 are input by being stored in the storage unit 130.

Once the temperature setting for each control zone is input, production of a molded product by the injection molding machine 1 starts (Step ST13). That is, while performing temperature control of the plurality of heaters 15 by the temperature control unit 117 provided in the processing unit 110 of the control device 100 according to the temperature setting for each control zone stored in the storage unit 130, the resin material is melted in the heating barrel 11, and production of a molded product is performed.

Once the production of a molded product by the injection molding machine 1 starts, the monitoring data and the temperature disturbance during molding of the molded product by the injection molding machine 1 are acquired (Step ST14). The monitoring data of the injection molding machine 1 during molding of the molded product is acquired by the monitoring data acquisition unit 113 provided in the processing unit 110 of the control device 100, and is stored in the storage unit 130. In addition, the temperature disturbance during molding of the molded product is acquired by the temperature disturbance acquisition unit 114 provided in the processing unit 110 of the control device 100, and is stored in the storage unit 130.

Once the monitoring data and the temperature disturbance are acquired, the in-barrel resin melting start position that is the resin melt state is calculated (Step ST15). Based on the monitoring data and the temperature disturbance acquired, the in-barrel resin melting start position is calculated by the melt state estimation unit 115 provided in the processing unit 110 of the control device 100. The calculation of the in-barrel resin melting start position is performed, for example, using Expression (1) above stored in advance in the storage unit 130. The in-barrel resin melting start position calculated by the melt state estimation unit 115 is stored in the storage unit 130.

Next, whether or not the monitoring data, the temperature disturbance, and the in-barrel resin melting start position that is the resin melt state are within the thresholds is determined (Step ST16). This determination is performed by the temperature setting unit 116 provided in the processing unit 110 of the control device 100. The temperature setting unit 116 compares the monitoring data, the temperature disturbance, and the in-barrel resin melting start position that is the resin melt state to the respectively set thresholds to determine whether or not these components are within the thresholds.

When it is determined that all of the monitoring data, the temperature disturbance, and the in-barrel resin melting start position are within the thresholds based on the determination by the temperature setting unit 116 (Step ST16: Yes determination), the production is continued (Step ST17). That is, the injection molding machine 1 continues molding of the molded product without changing the temperature setting when the heater 15 is controlled. While continuing production of the molded product, the injection molding machine 1 acquires the monitoring data and the temperature disturbance (Step ST14).

On the other hand, when at least one of the monitoring data, the temperature disturbance, and the in-barrel resin melting start position exceeds the threshold based on the determination by the temperature setting unit 116 (Step ST16: No determination), barrel temperature setting for control zones other than H1 at which the in-barrel resin melting start position is within the threshold is calculated (Step ST18). As for the calculation of the barrel temperature setting for the control zones other than H1 in this case, the temperature setting for control zones other than H1 at which the in-barrel resin melting start position can be made within the threshold is performed by the temperature setting unit 116 while considering the current in-barrel resin melting start position. As a result, the temperature setting unit 116 changes the temperature setting for at least one of the heaters 15 disposed in the control zones other than H1.

Once the temperature setting for the control zones other than H1 is calculated, the barrel temperature setting for the control zones other than H1 is automatically changed (Step ST19). That is, temperature control of the heaters 15 disposed in the control zones other than H1 is performed by the temperature control unit 117 based on the temperature setting calculated by the temperature setting unit 116. Once the barrel temperature setting for the control zones other than H1 is changed, the production of the molded product continues based on the changed temperature setting (Step ST17).

In the injection molding machine 1 according to the present embodiment, as described above, the resin melt state such as the in-barrel resin melting start position is calculated during molding of a molded product, and once at least one of the monitoring data, the temperature disturbance, and the in-barrel resin melting start position exceeds the threshold, by changing the temperature setting for the control zones other than H1, the temperature of the resin material is set to a temperature suitable for melting of the resin material to melt the resin material.

### <Simulation of Barrel Temperature Setting Automatic Change>

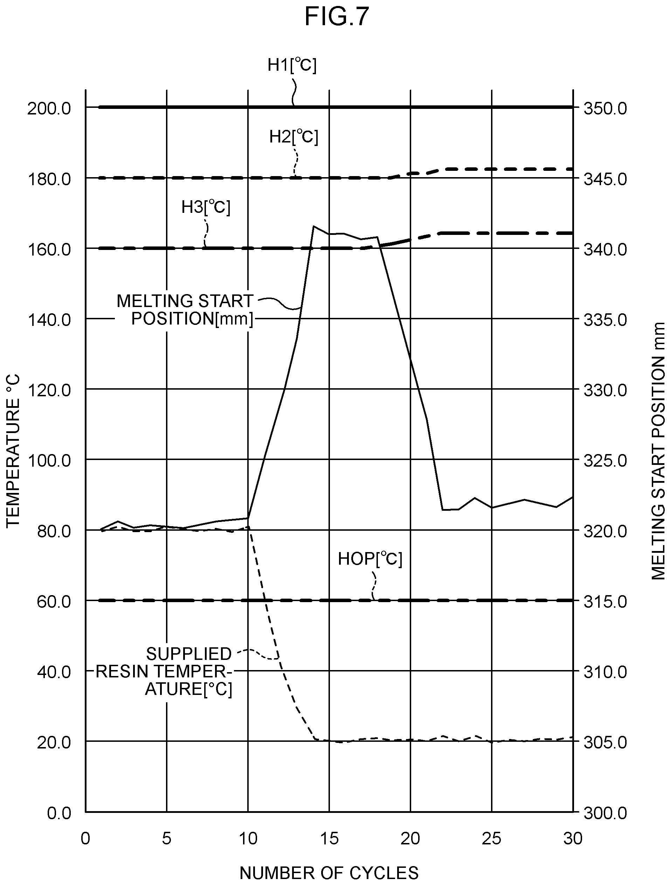

Next, a simulation result when a barrel temperature setting automatic change was performed through the above-described procedure will be described. FIG. 7 is a diagram illustrating the simulation result when the barrel temperature setting automatic change was performed. The simulation illustrated in FIG. 7 is the simulation result when three control zones of H1, H2, and H3 are set as the control zones, the size of the screw 20 is ϕ45 mm, polyethylene is used as the resin material, and the in-barrel resin melting start position is estimated as the resin melt state estimated by the melt state estimation unit 115.

In the simulation illustrated in FIG. 7, in a state where 200°C is input as the temperature setting for the control zone H1 and H2 = 180°C and H3 = 160°C are set for the control zones H2 and H3 according to a temperature gradient based on H1, continuous molding of a molded product is started. Note that the HOP in FIG. 7 is the temperature of the inlet of the resin material in the heating barrel 11.

Further, in the simulation illustrated in FIG. 7, a case is assumed in which the supplied resin temperature at the start of molding is set to 80°C by preheating, but the supplied resin temperature is decreased to 20°C from the 10th cycle onwards.

The melting start position illustrated in FIG. 7 represents the in-barrel resin melting start position that is an example of the resin melt state calculated from the monitoring data acquired from the injection molding machine 1 during molding of the molded product. The melting start position represents a distance in the longitudinal direction Y from the inlet of the resin material into the heating barrel 11, that is, a distance from the position of the hopper 18 toward the front side in the longitudinal direction Y.

In the simulation result illustrated in FIG. 7, since the supplied resin temperature decreases from the 10th cycle onwards, the amount of heat transferred to the resin material in the heating barrel 11 decreases, and the melting start position increases. That is, since the supplied resin temperature decreases from the 10th cycle onwards, the resin material in the heating barrel 11 is less likely to melt, and the melting start position moves toward the downstream side that is the side where the nozzle 12 is positioned in the longitudinal direction Y. When molding of the molded product is continued in this state, there is a concern that problems may occur, such as a change in the resin melt state in the heating barrel 11, a change in the metering time, the occurrence of unmelted resin, or an increase in shear heating, which may cause the temperature of the control zone H1 to exceed the set temperature, leading to an uncontrolled state.

When the melting start position exceeds the threshold by moving toward the downstream side, the temperature setting unit 116 provided in the processing unit 110 of the control device 100 calculates the barrel temperature setting for the control zones other than H1 to return the melting start position to within the threshold. In the simulation result illustrated in FIG. 7, the temperature setting unit 116 calculated H2 = 182°C and H3 = 164°C as the temperature setting for the control zones H2 and H3. The new temperature setting for the control zones H2 and H3 was applied from the 19th cycle onwards, and the melting start position decreased from the 19th cycle onwards. As a result, from the 19th cycle onwards, in which the new temperature setting for the control zones H2 and H3 was applied, the melting start position was observed to be returning to its original position.

As is clear from the above simulation result, when the resin melt state estimated by calculating the in-barrel resin melting start position or the like exceeds the threshold, the resin melt state in the heating barrel 11 can be maintained in a constant state by calculating and changing the barrel temperature setting for control zones other than H1 such that the resin melt state falls within the threshold. As a result, even when a disturbance such as a change in the supplied resin temperature occurs, stable continuous molding can be performed.

### <Effects of Embodiment>

In the injection molding machine 1 according to the above-described embodiment, the melt state estimation unit 115 estimates the resin melt state in the heating barrel 11 based on the monitoring data acquired by the monitoring data acquisition unit 113, and the temperature setting unit 116 performs the temperature setting for each of the heaters 15 based on the estimated resin melt state. As a result, even when the resin melt state changes because shear heating or the like occurs in the resin material melting in the heating barrel 11 and an amount of heat other than that from the heaters 15 is applied to the resin material, the temperature of the resin material in the heating barrel 11 can be set to a temperature at which the resin melt state is appropriate, by performing the temperature setting for the heaters 15 based on the estimated resin melt state. As a result, the temperature setting can be more appropriately performed when melting the resin, and molding failure caused by an insufficient amount of heat or an excess amount of heat of the resin material to be melted can be suppressed.

In addition, the temperature disturbance acquisition unit 114 that acquires the temperature disturbance from the temperature disturbance sensor 200 is provided, and the melt state estimation unit 115 estimates the resin melt state based on the monitoring data acquired by the monitoring data acquisition unit 113 and the temperature disturbance acquired by the temperature disturbance acquisition unit 114. Therefore, the resin melt state can be estimated with higher accuracy. Accordingly, the temperature setting for the heaters 15 that is performed based on the estimated resin melt state can be performed with higher accuracy in consideration of the resin melt state. As a result, the temperature setting can be more appropriately performed when melting the resin.

In addition, the temperature setting unit 116 changes the temperature setting for the heaters 15 when at least one of the monitoring data, the temperature disturbance, and the resin melt state exceeds the threshold. Therefore, in a situation where the resin melt state is inappropriate for molding the molded product, the resin melt state can be made suitable for molding the molded product by changing the temperature setting for the heaters 15. As a result, the temperature setting can be more appropriately performed when melting the resin.

In addition, since the melt state estimation unit 115 estimates the resin melt state from the monitoring data using a predetermined arithmetic expression, the resin melt state in the heating barrel 11 can be easily estimated with high accuracy. Accordingly, the temperature setting for the heaters 15 that is performed based on the resin melt state can be performed with high accuracy, and the resin melt state can be made suitable for molding the molded product. As a result, the temperature setting can be more appropriately performed when melting the resin.

In addition, since the temperature setting unit 116 performs the temperature setting for the distal end of the heating barrel 11 based on an input from outside the injection device 10, the temperature setting serving as a reference for the temperature control of the plurality of heaters 15 can be appropriately performed. That is, the temperature setting for the distal end in the heating barrel 11 is a final target temperature of the resin material to be melted. Therefore, by performing the temperature setting for the distal end based on the input from the outside, the final target temperature of the resin material can be easily and appropriately obtained irrespective of the type and physical properties of the resin material. Therefore, the resin material in the heating barrel 11 can be appropriately melted irrespective of the type and physical properties of the resin material. As a result, the temperature setting can be more appropriately performed when melting the resin.

### [Modification Examples]

Note that, in the above-described embodiment, H1 that is the control zone set at the distal end of the heating barrel 11 does not include the nozzle 12. However, the control zone H1 set at the distal end of the heating barrel 11 may include the nozzle 12 or may consist only of the nozzle 12. That is, when performing the temperature setting for the distal end of the heating barrel 11 based on an input from outside the injection device 10, the temperature setting unit 116 may perform temperature setting for a range including the nozzle 12 or for only the nozzle 12.

In addition, in the above-described embodiment, when the temperature setting for H1 that is the control zone set at the distal end of the heating barrel 11 is performed based on an input from outside the injection device 10, the temperature setting is performed through the input operation of the operator to the input/output unit 140. However, the temperature setting for H1 may be performed by means other than the input operation of the operator. For example, by performing flow analysis of the resin material using an application program for performing flow analysis of the molten resin material in the cavity 75a of the mold 75, the temperature setting for the control zone H1 set at the distal end of the heating barrel 11 may be performed based on a temperature derived from the flow analysis that is suitable for that of the resin material at the distal end of the heating barrel 11.

### EXPLANATIONS OF LETTERS OR NUMERALS

- 1: INJECTION MOLDING MACHINE
- 5: FRAME
- 10: INJECTION DEVICE
- 11: HEATING BARREL
- 12: NOZZLE
- 13: RESIN TEMPERATURE SENSOR
- 14: RESIN PRESSURE SENSOR
- 15: HEATER
- 16: COOLING UNIT
- 18: HOPPER
- 20: SCREW
- 21: FLIGHT
- 22: GROOVE PORTION
- 23: GROOVE WALL
- 24: COMMUNICATION PORTION
- 25: CHECK RING
- 30: PROPULSION MECHANISM
- 31: DRIVE ELECTRIC MOTOR
- 40: ROTATION MECHANISM
- 41: ROTATION MECHANISM MAIN BODY PORTION
- 43: DRIVE ELECTRIC MOTOR
- 44: ENCODER
- 45: DRIVE BELT
- 46: PULLEY
- 47: BEARING
- 50: ADVANCING AND RETRACTING MECHANISM
- 51: DRIVE ELECTRIC MOTOR
- 52: ENCODER
- 53: DRIVE BELT
- 54: PULLEY
- 56: BALL SCREW MECHANISM
- 57: THREADED PORTION
- 58: NUT PORTION
- 60: LOAD CELL
- 70: MOLD CLAMPING DEVICE
- 71: FIXED PLATEN
- 72: MOVABLE PLATEN
- 75: MOLD
- 75a: CAVITY
- 76: FIXED MOLD
- 77: MOVABLE MOLD
- 80: MOLD CLAMPING DRIVE MECHANISM
- 81: TOGGLE MECHANISM
- 85: EJECTION MECHANISM
- 86: EJECTION MEMBER
- 100: CONTROL DEVICE
- 110: PROCESSING UNIT
- 111: ROTATION CONTROL UNIT
- 112: MOVEMENT CONTROL UNIT
- 113: MONITORING DATA ACQUISITION UNIT
- 114: TEMPERATURE DISTURBANCE ACQUISITION UNIT
- 115: MELT STATE ESTIMATION UNIT
- 116: TEMPERATURE SETTING UNIT
- 117: TEMPERATURE CONTROL UNIT
- 130: STORAGE UNIT
- 140: INPUT/OUTPUT UNIT
- 150: INPUT UNIT
- 160: DISPLAY UNIT
- 200: TEMPERATURE DISTURBANCE SENSOR
- 201: AMBIENT TEMPERATURE SENSOR
- 202: COOLING WATER TEMPERATURE SENSOR
- 203: SUPPLIED RESIN TEMPERATURE SENSOR
- 204: BARREL INNER WALL TEMPERATURE SENSOR
- 205: HEATER-VICINITY TEMPERATURE SENSOR

## Claims

1. An injection molding machine comprising:
an injection device configured to melt a resin material using a heating barrel in which a screw is disposed, and move the screw toward where a nozzle for injecting the molten resin material is positioned to inject the resin material from the nozzle;
a plurality of heaters arranged in a longitudinal direction of the heating barrel and configured to heat the resin material in the heating barrel;
a temperature control unit configured to perform temperature control for each of the plurality of heaters arranged on the heating barrel;
a monitoring data acquisition unit configured to acquire monitoring data detected by the injection device when the resin material is melted by the injection device;
a melt state estimation unit configured to estimate a resin melt state that is a melt state of the resin material in the heating barrel based on the monitoring data acquired by the monitoring data acquisition unit; and
a temperature setting unit configured to perform temperature setting when the temperature control of the heater is performed by the temperature control unit, for each of the heaters, based on the resin melt state estimated by the melt state estimation unit.

2. The injection molding machine according to claim 1, further comprising:
a temperature disturbance sensor configured to detect temperature disturbance when the resin material is melted by the injection device; and
a temperature disturbance acquisition unit configured to acquire the temperature disturbance from the temperature disturbance sensor, wherein
the melt state estimation unit is configured to estimate the resin melt state based on the monitoring data acquired by the monitoring data acquisition unit and the temperature disturbance acquired by the temperature disturbance acquisition unit.

3. The injection molding machine according to claim 2, wherein when at least one of the monitoring data, the temperature disturbance, and the resin melt state exceeds a threshold, the temperature setting unit is configured to change the temperature setting for the heater.

4. The injection molding machine according to claim 1 or 2, wherein the melt state estimation unit is configured to estimate the resin melt state from the monitoring data using a predetermined arithmetic expression.

5. The injection molding machine according to claim 1 or 2, wherein the temperature setting unit is configured to perform the temperature setting for a distal end based on an input from outside the injection device, the distal end being an end of the heating barrel closer to where the nozzle is positioned.
